# EUROPEAN PATENT SPECIFICATION

(11) **EP 2 749 384 B1**
(45) Date of publication and mention of the grant of the patent: **30.08.2017**
(21) Application number: 12199765.4
(22) Date of filing: 28.12.2012
(51) Int. Cl.: B25J 11/00, B25J 13/08

(54) **Robot device generating a linear movement for pram or stroller/wheeled cradle/wheeled cot**
Robotervorrichtung zur Erzeugung einer linearen Bewegung für Kinderwagen oder Buggy / Rädern Wiege / Kinderbett auf Rädern
Dispositif de robot pour générer un mouvement linéaire pour une poussette / roues berceau / lit à roues

(43) Date of publication of application: 02.07.2014
(73) Proprietor: Bruni Prencipe, Andrea, 16012 Busalla (GE) (IT); Bruni Prencipe, Francesco, 16012 Busalla (GE) (IT); Bruni Prencipe, Roberto, 16122 Genova (IT)
(72) Inventor: Bruni Prencipe, Francesco, 16012 Busalla (GE) (IT)
(74) Representative: Karaghiosoff, Giorgio Alessandro

(56) References cited:
- CN-Y- 201 039 043
- US-A1- 2004 080 243
- ANONYMOUS: "Culla Suima: La prima culla per bambini completamente automatica", INTERNET CITATION, 20 February 2009 (2009-02-20), pages 1-4, XP002682864, Retrieved from the Internet: URL:http://www.vincechiosa.com/2009/02/cul la-suima-la-prima-culla-per-bambini.html [retrieved on 2012-07-05]

## Description

The present invention relates to a new type of portable household appliance/robot and equipment for babies that once it is placed near a pram or stroller/wheeled cradle/wheeled or small wheeled cot, of the type for babies/children, preferably placed on a plane horizontal and sufficiently smooth, namely with no considerable obstacles for the wheels, it serves for moving it, by hauling it, by an arm, back and forth through small oscillations set in few centimeters with respect to a starting position in any directions in the path along which the arm moves and which are made at a low speed, preferably from 0.0001 metres per second to few metres per second in a semi/automatic manner or in a fully automatic manner, simulating the movement that up to now has been always made manually, usually by the hand or the foot, by the person who desires or desired to get to sleep or to calm down a child lying in a pram, or stroller/wheeled cradle/wheeled cot.

It is specified that the term "semi/automatic" means a mode for moving the pram where it is necessary to act for example by pressing a button/switch, for switching on/off the device of the present invention when desired.

The term "fully automatic" means a mode for moving the pram wherein after having switched on the device of the present invention, without the need of any further interventions, the device performs its function automatically for a specific period of time only when the sensors of the invention and/or other sensors connected thereto, described below, detect that the baby is getting restless or is getting restless again in the pram.

### Background of the state of the art

Currently there is no such an object portable and of universal use, that is specifically made for being applied and used in a simple way everywhere and by anyone, and at least generally, on any type of pram, or stroller/wheeled cradle.

As it is known, up to now only auto-rocking rockers have been made, that is objects comprising a simple mechanism moved by a motor that makes them to move by themselves, which however is not usable at all for moving other objects, except for that wherein the mechanisms is provided.

In the present case, it has to be noted that it is not an object (intended for children) auto-rocking by means of a motor inserted into the object, but it is a portable apparatus and generally of universal use, also actually quite light in weight and of very small dimensions, which serves for moving, likewise a mother would do with a child sitting on a pram, wishing to calm down or to put him/her to sleep, in a semi/automatic or fully automatic way objects made for transporting and/or for resting children, but which are free from any type of mechanisms for being able to move by themselves, that is objects that have been made "for rocking babies or children in the pram, or stroller/wheeled cradle/wheeled cot, by themselves or automatically.

Moreover devices accomplishing the function of automatically rocking the child are known, such as for example the device "Suima Crib" available on web page:http://www.vincechiosa.con/2009/02/culla-suima-la-prima-culla-per-bambini.html.

However such device is composed of a motorized pram. It is an object automated for its exclusive use: the mechanism fitted in the pram-cradle is absolutely not usable for moving other objects, but only the one where the mechanism is included, namely it is not adaptable to any other device.

Moreover the fact of including the mechanism that automatically rocks the child inside the pram, not only it does not allow equipment adapted to any device to be rocked to be made, but it increses the weight, the size and the cost of the pram, preventing it from being easily transported and pushed.

Therefore there is the unsatisfied need of providing a device for automatically rocking children that is adaptable to any device, whether it is a pram, a stroller or a cradle, solving the known prior art drawbacks.

US 2004/080243 discloses the use of an electric motor and a mechanical actuator for transforming radial motion into a linear motion.

The present invention achieves the above aims by providing a robot device generating an alternating linear motion according to the preamble of claim 1 further comprising the combination of features according to the characterizing part of claim 1.

Now it will be described how the device of the present invention has been made in practice

### Mechanical parts

In the invention, a mechanism, no matter how it is made, for example by gears/connecting rod-crank system/prefabricated actuator, moved by a motor, directly connected to a power supply and drivable by a switch/remote control or controlled by suitable electronics, easily performs a repeated linear back and forth motion.

Such repeated linear motion has maximum ranges of some centimeters in both the directions in a specific path of an axle moving on a runner/bearings and continuing outside the case/box, namely the external design of the invention containing in the invention the mechanisms for moving it, in a rod, aligned rigidly connected to the internal axle, which constitutes the above mentioned arm of the object and which is made so as to be easily coupable to the frame or to points considered as suitable in almost each type of stroller/ pram or wheeled cradle or to suitable optional support/directional equipment for the wheels, by means of said coupling members.

Said coupling members for example can be composed of a kind of carabiner in practice composed of a small fork, that is a "U" shaped holding tool, provided with a closure by an elastic band at the ends of its two open ends, or tips, or as an alternative by a strap length adjustable and openable by buckle or an equivalent system for closing the strap or by means of other holding object such to grip, that is to keep something attached thereto, with which such arm is provided at the end.

The coupling members can be composed of any means known in the prior art allowing the free end of the arm to be connected to the pram or stroller of interest.

It is specified that when using the invention, it is obviously necessary to couple it such that the wheels of the baby pram or stroller/baby wheeled cradle/baby wheeled cot can freely move along the direction wherein the arm moves.

### Cabling and electronics for automation and control of the device:

According to a possible embodiment the device of the present invention comprises control electronics intended to set the operation of said electric motor.

In a functional implementation of the invention, that is the one that can be defined as "fully automatic", that will be decribed in one embodiment below, uses with a low voltage operation (battery), and is equipped with a microcomputer that controls the motor, and it operates it for a given period of time by a timer, when the sensors contained in the robot, sensors suitably placed in the device, in such a position to efficaciously control these aspects of the condition of the child in the pram/stroller/wheeld cradle/wheeled cot with a "motion detection" circuit connectable, in the invention, to a telecamera or other external sensors the user desires to use, connectable by suitable inputs provided in the device, detect that the baby/child is getting restless that he/she is moving in the pram or stroller/baby wheeled cradle/baby wheeled cot.

In this type of implementation, the provided electronics control also particular important safety aspects related to the use of the invention with these type of advanced automation functions.

It is specifided that the term "motion detection" is known in the prior art and it denotes an electronic circuit or software able to perceive whether, in the area monitored by a telecamera connected thereto, a person is moving and in the affirmative case it generates a suitable control/warning signal, that is an electronic circuit that in the present invention serves for monitoring whether the child is moving in the pram.

Regardless of the implementation, the device of the present invention, according to a possible embodiment, has at least one detection sensor intended to detect eventual movements of the child.

Such sensor communicates with the electric motor by setting the operation according to any methods known in the prior art, on the basis of the child's conditions.

Advantageous effects introduced by the invention with respect to prior art.

First of all the device of the present invention calms down the baby by helping him/her to fall asleep in a natural way, since it rocks him/her in a way (gesture generating the movement) perfectly similar to the one always made by a mother moving a pram where her baby lies.

Moreover it makes it possible for the person using it and that is sure that the child is fine and has only to fall asleep, to contemporaneously devote himself/herself to other tasks or to have a more quiet rest.

It is easy to be transported from one location to onter one by the very light weight of all the components, including motor and battery, and to the handle the invention is equipped with.

It can be applied by anyone and in an intuitive and immediate manner, at least generally, to almost each type of pram/stroller/wheeled cradle.

It is fed by low voltage by means of a battery or solar cells such to be used comfortably in many different places or where it would not be possible to connect to mains and with safety, moreover due to the fact that it does not connect to the mains it is therefore safe from all the risks of a direct connection to the mains, such as for example overvoltages, lightnings, current leakage, etc.

### A way to implement the invention

### A) Mechanical components of the invention.

### Mechanism generating the movement

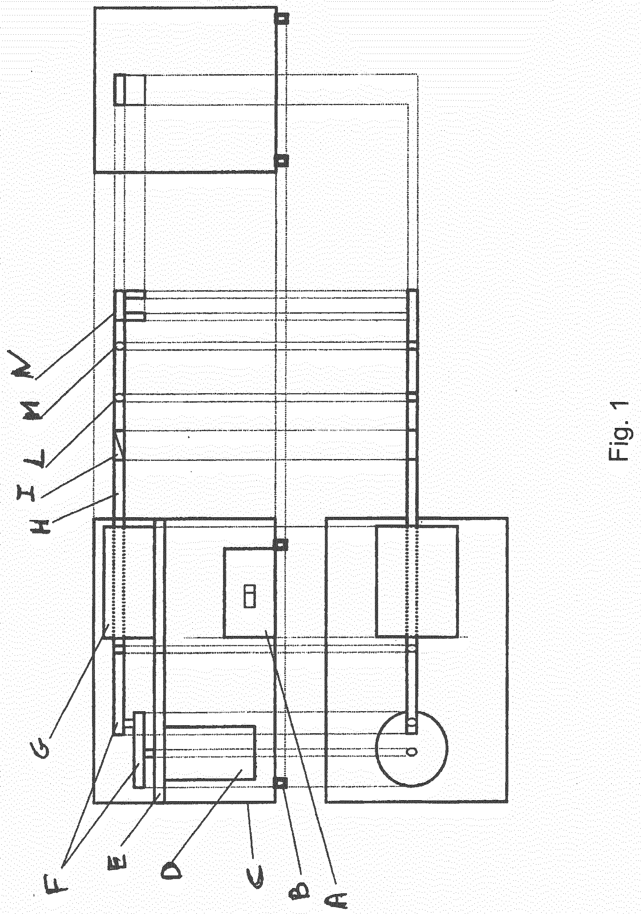

As it can be seen in figure 1, that outlines the main mechanical components forming the mechanism for the type of implementation of the invention described below in the several side, top and front views of the invention, the horizontal translation motion is made by a direct current electric motor D suitably secured on a supporting plate E that transmits the motion to a "connecting rod-crank" mechanism F, which by a guide runner G, defines the direction of the motion of axle H and transmits the linear motion to the following part namely the "arm" of the robot, through a joint I placed outside the box C containing the mechanism moving it. Letter A outlines the powering switch of the invention. Letter B outlines one of the feet resting on the floor.

It is specified that the term "connecting rod-crank" F, in this implementation of the invention, means a type of preferred mechanism than a prefabricated linear actuator, essentially for reducing as much as possible production costs and for allowing probably a better selling price: the fact of using the connecting rod-crank system or the already ready linear actuator with suitable characteristics and available on the market, as regards the operation, obviously is a completely equivalent thing.

The motor performing the motion has been selected on the basis of the size of the connecting rod-crank mechanism made and on the basis of the necessary torque and speed, values experimentally obtained in real cases of operation also on the outside on a surface smooth enough/mown grass or courtyard, for the function of the object by using the selected mechanism.

Moreover it has to be specified that the implementation just described is a possible implementation of the actuator belonging to the device of the present invention.

It is possible to provide the actuator to be made by a "screw-lead screw" system and by means of a system automatically inverting the voltage applied to the motor D, which system controls the automatic change in direction by means of suitable sensors controlling the motion of the actuator.

In this particular case the screw is connected to the speed reducer and the lead screw is connected to the arm.

As an alternative the actuator can be made by a rack and gear wheel-pinion that is by a "sprocket wheel-rack" mechanism, and by a system automatically inverting the voltage applied to the electric motor D controlling the automatic change in direction of the rack by means of suitable sensors monitoring the motion of the actuator.

According such variant, the gear wheel is fitted on the output axle of the speed reducer and the rack is connected to the movable part of a linear guide, connected in turn to the arm.

System for the coupling and hold on the pram stroller/wheeled cradle/wheeled cot.

The end of the robot arm is equipped with a kind of carabiner composed of a small "fork with closure", that is a "U" shaped holding hook with the possibility of closing the hold between the two end "tips" of the "U" by an elastic band, denoted by N in table 1: this serves for coupling the arm of the invention at its end to parts of the pram or stroller/wheeled cradle/wheeled cot or to suitable optional equipment for the support/direction of the wheels.

For a better coupling flexibility, such fork with closure N is further free of rotating by 360°, with respect to an axial axis with the joint to which it is directly connected and it can be locked in the preferred angle position.

In order to use the invention in an universal manner that is also with prams or strollers/wheeled cradles/wheeled cots with frames with heights from the ground different from one another that is in order to couple the robot to points of the frames considered by the user intuitively the most comfortable ones and suitable for the aim or at possible attachment points/parts of frames of prams that probably, once the new object is marketed, will be prepared and prearranged for the aim by manufacturers of baby prams or strollers and in order to obtain still a higher functionality and easiness of use, as it can be noted also from drawings in figure 1, the rod translating back and forth, and that in its part outside the box containing the mechanism moving it is the arm of the invention, is composed of two detachable and distinct parts: the first one, as a single piece is placed inside the invention and it is a part in practice of the connecting rod-crank system. The second one can be made of several pivotable segments, or arm limbs, and namely the second segment of the arm can rotate, preferably on the same plane, about the fulcrum M and can be locked with a certain angle with respect to the first segment of the arm and similarly the third segment of the arm can rotate, preferably on the same plane, about the fulcrum N and it can be locked with a certain angle with respect to the second segment of the arm.

The rigid connection between the axle moving in the runner and the arm is made by the above mentioned openable joint, outlined in table 1 with I, that is by a common connection system that allows the two parts joined by it to be separated, and that is in the invention, the one rigidily connected to the internal translating axle sliding in the guide runner and the one rigidly connected to the arm placed outside the casing of the invention i.e. outside the box containing among other things also the mechanism moving the arm: this is to allow the user to detach the articulated arm of the device that otherwise, if it would not be detachable, would somewhat hindered the place where the robot is stored when the invention is not in use.

As an alternative, still with the perspective of reducing the overall size of the device of the present invention, it is possible to provide the arm to be composed of a telescopic element, such to reduce its own length, consequently reducing the overall dimensions.

On the basis of tests made with different parents/baby-sitters and several types of prams/strollers/wheeled cradles it has been found that the user has only to try to couple the invention such to immediately understand where it is better to couple it. The location where coupling the invention namely is a very intuitive issue, and it has been found, at least generally, that it is always possible with a great easiness in types of prams/strollers and wheeled cradles nowadays offered in the market, and however when selling the object, it will be possible to give information or suggestions or even new equipment can be suggested such to adapt the invention, on the basis of the type of pram or stroller/wheeled cradle/wheeled cot of the client.

System for holding the invention on the floor or ground in order to prevent the invention from maybe slipping on the floor/ground when this is somewhat slippery or not too much flat.

According to a possible embodiment, the device of the present invention comprises an external case C having means for removably securing the device in place.

Particularly the invention comprises also the following features, which are not shown in the figures in table 1, for simplicity reasons:

A proper system of suction cups and suitable feet inserted in the parts of the invention resting on the ground, in order to block at a greater extent, if necessary, such to use the invention on floors with very smooth or polished surfaces, the position of the robot such that it remains always perfectly still in the position it is placed, during its use.

A suitable tank housed in a part of the invention, where a suitable ballast can be inserted, provided as an equipment, for preventing the device of the present invention from moving, it being actually quite lightweight, when using the device outdoor, for example on a pavement, on a green or a courtyard, for example a small stone hindering the free movement of the pram wheels, which could cause the invention to move towards the pram and not vice versa.

### Equipment for easily transporting the robot.

As mentioned above, the invention is provided with an handle and a suitable wheel system for being easily transported from one place to another place.

### Type of designs tested and made for the external appearance of the invention.

Among the shapes selected for making the outer case of the device of the present invention it is possible to mention those of brightly coloured animals in order to make it more consonant with and appreciated in all the environments where there is a baby: among these the ladybird, tortoise, carterpillar, crab, elephant, teddy bear, dog, kitten, claimed and tested as ideal designs for the invention described herein, i.e. designs perfectly consonant with and in harmony with the invention, since the invention is intended for the care and for growing contexts of children, where these drawings by tradition and education of the child by now are particularly accepted, required and preferred.

That is to say the invention in its external appearance has been made with different suitable designs, shapes and colours and materials such to evaluate the different approval on the market.

### B) Electronics for automation and control of the device

Use of microcomputer, sensors and control circuits.

In this implementation of the invention for achieving the full automation of the invention microcomputer has been used.

After switching on the robot by a button, such microcomputer controls the motor that generates the movement by a suitable interface, and it drives it for a predetermined period of time.

The period of time is set by detection devices such as sensors or the like.

Sensors can be composed of motion sensors for example a pendulum sensor, placed on the arm with eventually the addition of a vocal sensor, such as a microphone or the like, or as an alternative, by arranging a telecamera, of an output signal of a "motion detection electronic circuit", such to detect the fact that the baby/child is getting restless and/or is crying inside the pram, by the digital vocal recognition circuit.

The motion sensor and the microphone are suitably placed in the device, such to effectively control these aspects of the condition of the baby in the pram.

By means of a suitable input in the device however it is possible to control the motor switching on or off also by a possible external control circuit placed on the pram. As a sensor able to detect a movement of the baby, such as for example a passive infrared sensor PIR with a suitable lens can be used. The PIR is a sensor able to detect a differential on the passive infrared emission detected in a specific area, coverage area, that depends also on the lens used, or a remote control on wire.

By means of a radio control it is possible to start, when the motor moves the pram, a mp3 reader incorporated in the object that plays by an amplifier, preferably a low power one, and a loudspeaker incorporated in the object a melody as one desires, selectable on a menu displayed on a dispay, among some songs previously stored in the reader or that can be transferred in it by USB port directly from a PC.

It is again specified that the term "motion detection" circuit denotes a type of electronic circuit, used nowadays in many applications and included, in this version of the invention, in the electronics of the device and to which it is possible to connect a telecamera monitoring the baby, and if desired, also under wireless mode, a monitor for watching the baby remotely by the telecamera.

### Provided safety

A variant embodiment of the electronics controlling the operation of the electric motor provides the microcomputer also to constantly control whether the current absorbed by the motor is correct or is excessive, for example when something remains by mistake under the wheels of the stroller and prevents it from moving therefore the motor overworks and it absorbs a lot of current, and if it is excessive it switches the motor off and gives a warning signal.

As important safety during the fully automatic use, the microcomputer controls whether the invention tends to move with respect to the ground where it is placed, thing that can happen if the invention slips or if something hinders the motion of the wheels on the ground, or whether the invention operates on a "not much horizontal or smooth" plane, through some motion sensors placed under the base of the invention which test whether the invention is moving with respect to the ground, detecting the occurance of the smallest movement. If the invention is moving, the microcomputer acts by switching the motor off and by giving a warning signal till a suitable button for starting again the motion is pressed.

In the practical implementation of the invention some leds have been also placed such to lighten the area wherein the motion takes place, which are activated when it moves, even for verifying more easily, in case of a use in the dark, for example, in the night, while one is on the bed to rest, the effective motion of the pram or stroller/wheeled cradle/wheeled cot.

Finally it is underlined that the novel invention has been tested for a long time on babies and young children.

## Claims

1. Robot device generating an alternating linear motion for automatically moving, by translation, back and forth any type of stroller/cradle for babies/children,
**characterized in that**
it comprises at least one electric motor (D) connected to a gear speed reducer, which reducer is connected to an actuator (F) converting the rotational motion into an alternating linear back and forth motion,
said device comprising at least one pivotable arm, which arm is connected with one end thereof to said actuating device (F), while said pivotable arm is provided at the other end with means (N) for coupling to said stroller/cradle,
wherein there is provided a control electronics configured to set the operation of said electric motor (D);
the said control electronics comprising a microcomputer, sensors and control circuits;
at least one of the sensors is a detection sensor adapted to detect movements of the stroller/cradle.

2. Device according to claim 1, wherein said actuator is a connecting rod-crank type mechanism.

3. Device according to claim 2, wherein said arm is connected to one end of the connecting rod belonging to the connecting rod-crank mechanism (F).

4. Device according to claim 1, wherein said electric motor (D) is a direct current electric motor (D).

5. Device according to claim 1, wherein said actuator (F) is made by a "screw-lead screw" system and by a system automatically inverting the voltage applied to said motor (D), which system controls the automatic change in direction by suitable sensors controlling the motion of the actuator (F).

6. Device according to claim 5, wherein the screw in connected to said speed reducer and the lead screw is connected to said arm.

7. Device according to claim 1, wherein said actuator (F) is made by rack and gear wheel-pinion that is by a "sprocket wheel-rack" mechanism, and by a system automatically inverting the voltage applied to the electric motor (D) controlling the automatic change in direction of the rack by means of suitable sensors monitoring the motion of the actuator (F).

8. Device according to claim 7, wherein the gear wheel is fitted on the output axle of the speed reducer and that the rack is connected to the movable part of a linear guide, connected in turn to said arm.

9. Device according to claim 1, wherein the technical characteristics of the motor (D) and of the speed reducer and the dimensional ones of the actuating mechanism (F) are selected such to obtain a speed of the arm in both the directions ranging from 0.0001 metres/sec to 10 metres/sec, such to obtain a movement in both the directions of some centimetres and a suitable load capacity for displacing the stroller/cradle on a horizontal plane.

10. Device according to claim 1, wherein an outer case (C) is provided which has means (B) for removably fastening said device in place.

11. Device according to claim 1 in which the motor is switched on by coded radio control.

12. Device according to claim 11 in which the said coded radio control activates an mp3 reader connected to an amplifier and loudspeaker to play songs stored in the said reader.

## Patentansprüche

1. Robotervorrichtung, die eine abwechselnde lineare Bewegung durch Translation zum automatischen Rückwärts- und Vorwärtsbewegen von jedem Typ von Kinderwagen/Wiege für Säuglinge/Kinder erzeugt,
**dadurch gekennzeichnet, dass**
sie mindestens einen Elektromotor (D) umfasst, der mit einem Untersetzungsgetriebe verbunden ist, wobei das Getriebe mit einem Stellantrieb (F) verbunden ist, der die Drehbewegung in eine abwechselnde lineare Rückwärts- und Vorwärtsbewegung umwandelt,
wobei die Vorrichtung mindestens einen schwenkbaren Arm umfasst, wobei der Arm mit einem Ende davon mit der Betätigungsvorrichtung (F) verbunden ist, während der schwenkbare Arm an dem anderen Ende mit Mitteln (N) zum Koppeln an den/die Kinderwagen/Wiege versehen ist,
wobei eine Steuerelektronik bereitgestellt ist, die ausgebildet ist, um den Betrieb des Elektromotors (D) festzulegen;
wobei die Steuerelektronik einen Mikrorechner, Sensoren und Steuerschaltungen umfasst;
wobei mindestens einer der Sensoren ein Erfassungssensor ist, der angepasst ist, um Bewegungen des/der Kinderwagens/Wiege zu erfassen.

2. Vorrichtung nach Anspruch 1, wobei der Stellantrieb ein Mechanismus vom Pleuelstange-Kurbelgetriebetyp ist.

3. Vorrichtung nach Anspruch 2, wobei der Arm mit einem Ende der Pleuelstange verbunden ist, die dem Pleuelstange-Kurbelgetriebe-Mechanismus (F) zugehörig ist.

4. Vorrichtung nach Anspruch 1, wobei der Elektromotor (D) ein Gleichstrom-Elektromotor (D) ist.

5. Vorrichtung nach Anspruch 1, wobei der Stellantrieb (F) durch ein "Schraube-Führungsschraube"-System und durch ein System hergestellt ist, das automatisch die Spannung umwandelt, die auf den Motor (D) angewandt wird, wobei das System die automatische Richtungsänderung durch geeignete Sensoren steuert, welche die Bewegung des Stellantriebs (F) steuern.

6. Vorrichtung nach Anspruch 5, wobei die Schraube mit dem Untersetzungsgetriebe verbunden ist und die Führungsschraube mit dem Arm verbunden ist.

7. Vorrichtung nach Anspruch 1, wobei der Stellantrieb (F) durch eine Zahnstange und ein Zahnradritzel eines "Kettenrad-Zahnstangen"-Mechanismus und durch ein System hergestellt ist, das die Spannung, die auf den Elektromotor (D) angewandt wird, der die automatische Richtungsänderung der Zahnstange mittels geeigneter Sensoren steuert, welche die Bewegung des Stellantriebs (F) überwachen, automatisch umwandelt.

8. Vorrichtung nach Anspruch 7, wobei das Zahnrad auf der Antriebsachse des Untersetzungsgetriebes angebracht ist und die Zahnstange mit dem beweglichen Teil einer linearen Führung verbunden ist, die wiederum mit dem Arm verbunden ist.

9. Vorrichtung nach Anspruch 1, wobei die technischen Merkmale des Motors (D) und des Untersetzungsgetriebes und die dimensionalen Merkmale des Betätigungsmechanismus (F) derart ausgewählt sind, dass eine Drehzahl des Arms in beide Richtungen im Bereich von 0,0001 Metern/Sek. bis 10 Metern/Sek. erhalten wird, dass eine Bewegung von einigen Zentimetern in beide Richtungen und eine geeignete Nutzlast zum Verschieben des/der Kinderwagens/Wiege auf einer horizontalen Ebene erhalten wird.

10. Vorrichtung nach Anspruch 1, wobei eine äußere Hülle (C) vorgesehen ist, die Mittel (B) zum lösbaren Befestigen der Vorrichtung an Ort und Stelle hat.

11. Vorrichtung nach Anspruch 1, wobei der Motor durch eine kodierte Funksteuerung eingeschaltet wird.

12. Vorrichtung nach Anspruch 11, wobei die kodierte Funksteuerung ein MP3- Lesegerät aktiviert, der mit einem Verstärker und Lautsprechern verbunden ist, um Lieder in dem Lesegerät abzuspielen.

## Revendications

1. Dispositif robot générant un mouvement alternatif linéaire pour obtenir un déplacement en translation de va-et-vient de tout type de poussette/berceau pour bébés/enfants,
**caractérisé en ce que** :
il comprend au moins un moteur électrique (D) relié à un engrenage réducteur de vitesse, ledit réducteur étant relié à un actionneur (F) convertissant le mouvement de rotation en mouvement alternatif linéaire de va-et-vient,
ledit dispositif comprenant au moins un bras pivotant, ledit bras étant relié avec une extrémité audit dispositif actionneur (F), ledit bras pivotant étant pourvu, à l'autre extrémité, de moyens (N) d'accouplement à ladite poussette ou audit berceau,
dans lequel une électronique de commande est prévue, qui est conçue pour régler le fonctionnement dudit moteur électrique (D) ;
ladite électronique de commande comprenant un micro-ordinateur, des capteurs et des circuits de commande ;
au moins un des capteurs est un capteur de détection apte à détecter les mouvements de la poussette/du berceau.

2. Dispositif selon la revendication 1, dans lequel ledit actionneur est un mécanisme de type bielle-manivelle.

3. Dispositif selon la revendication, dans laquelle ledit bras est relié à une extrémité de la bielle du mécanisme bielle-manivelle (F).

4. Dispositif selon la revendication 1, dans lequel ledit moteur électrique (D) est un moteur électrique (D) en courant continu.

5. Dispositif selon la revendication 1, dans lequel ledit actionneur (F) est réalisé par un système à « vis et écrou » et par un système d'inversion automatique de la tension appliquée audit moteur (D), ledit système commandant le changement automatique de direction par des capteurs appropriés, commandant le mouvement de l'actionneur (F).

6. Dispositif selon la revendication 5, dans lequel la vis est reliée audit réducteur de vitesse et l'écrou est relié audit bras.

7. Dispositif selon la revendication 1, dans lequel ledit actionneur (F) est réalisé par une crémaillère et une roue dentée-pignon, c'est-à-dire par un mécanisme à « pignons et crémaillères », et par un système d'inversion automatique de la tension appliquée audit moteur (D), commandant le changement automatique de direction de la crémaillère par des capteurs appropriés, qui contrôlent le mouvement de l'actionneur (F).

8. Dispositif selon la revendication 7, dans lequel la roue dentée est montée sur l'axe de sortie du réducteur de vitesse et la crémaillère est reliée à la partie mobile d'un guide linéaire, relié à son tour audit bras.

9. Dispositif selon la revendication 1, dans lequel les caractéristiques techniques du moteur (T) et du réducteur de vitesse et les caractéristiques dimensionnelles du mécanisme actionneur (F) sont choisies de façon à obtenir une vitesse du bras dans les deux directions de 0,0001 mètres/sec à 10 mètres/sec, pour obtenir un mouvement de quelques centimètres dans les deux directions, et une capacité de charge appropriée pour le déplacement de la poussette/du berceau sur un plan horizontal.

10. Dispositif selon la revendication 1, dans lequel un boîtier extérieur (C) est prévu, possédant des moyens (B) de fixation amovible dudit dispositif en position.

11. Dispositif selon la revendication 1, dans lequel le moteur est mis en marche par une radiocommande codifiée.

12. Dispositif selon la revendication 11, dans lequel ladite radio commande codifier actionne un lecteur MP3 connecté à un amplificateur et à un haut-parleur pour reproduire des chansons mémorisées dans ledit lecteur.
